# EUROPÄISCHE PATENTANMELDUNG

(11) **EP 4 825 574 A1**
(43) Veröffentlichungstag der Anmeldung: **21.10.2026**
(21) Anmeldenummer: 25171040.6
(22) Anmeldetag: 16.04.2025
(51) Int. Cl.: B32B 1/08, B32B 7/12, B32B 27/08, B32B 27/12, B32B 27/30, B32B 27/32, B32B 27/34

(54) **HOHLKÖRPER, INSBESONDERE KRAFTFAHRZEUG-ROHRLEITUNG UND/ODER KRAFTFAHRZEUG-TANK**

(71) Anmelder: TI Fluid Systems Engineering GmbH, 76437 Rastatt (DE)
(72) Erfinder: Kizilay, Irfan, 68799 Reilingen (DE); Leipold, Stefan, 67470 Seltz (FR); Bleider-Bost, Peter, 76676 Graben-Neudorf (DE); Blomberg, Dirk, 76456 Kuppenheim (DE); Roeder, Manuel, 76437 Rastatt (DE)
(74) Vertreter: Andrejewski - Honke Patent- und Rechtsanwälte Partnerschaft mbB

(57) **Zusammenfassung**

Die Erfindung betrifft einen Hohlkörper zur Durchleitung und/oder zur Speicherung zumindest eines fluiden Mediums. Der Hohlkörper weist einen Innenraum und eine den Innenraum umgebende Wandung auf. Die Wandung ist mehrschichtig ausgebildet und weist zumindest vier Schichten auf und zwar mit folgendem Schichtaufbau von innen nach außen. Eine Innenschicht aus zumindest einem Polyamid. Eine Barriereschicht aus zumindest einem Vinylalkohol-Polymer. Einer Haftvermittlerschicht. Eine Außenschicht aus Polyethylen.

## Beschreibung

Die Erfindung betrifft einen Hohlkörper, insbesondere eine Kraftfahrzeug-Rohrleitung und/oder einen Kraftfahrzeug-Tank, zur Durchleitung und/oder zur Speicherung zumindest eines fluiden Mediums, insbesondere zur Durchleitung und/oder zur Speicherung von Wasserstoff, wobei der Hohlkörper einen Innenraum und eine den Innenraum umgebende Wandung aufweist und wobei die Wandung mehrschichtig ausgebildet ist. Bei dem erfindungsgemäßen Hohlkörper handelt es sich bevorzugt um eine Kraftfahrzeug-Rohrleitung und sehr bevorzugt um eine Wasserstoffleitung für Kraftfahrzeuge. Gemäß weiter bevorzugter Ausführungsform handelt es sich bei dem erfindungsgemäßen Hohlkörper um einen Kraftfahrzeug-Tank und sehr bevorzugt um einen Wasserstofftank für Kraftfahrzeuge. Es ist in diesem Zusammenhang bevorzugt, dass es sich bei dem Kraftfahrzeug-Tank bzw. Wasserstofftank um einen Innentank, insbesondere um einen Wasserstoff-Innentank, handelt. Solche Wasserstoff-Innentanks werden auch als Wasserstoff-Liner bezeichnet. Es ist außerdem bevorzugt, dass das fluide Medium, insbesondere der Wasserstoff, unter Druck durch den Hohlkörper geleitet bzw. in dem Hohlkörper gespeichert wird.

Der erfindungsgemäße Hohlkörper wird zur Durchleitung und/oder zur Speicherung zumindest eines fluiden Mediums und insbesondere zur Durchleitung und/oder zur Speicherung von Wasserstoff verwendet. Wenn hier und nachfolgend von Wasserstoff die Rede ist, ist damit insbesondere molekularer Wasserstoff (H₂) gemeint. Wenn es sich bei dem Hohlkörper gemäß bevorzugter Ausführungsform um eine Kraftfahrzeug-Rohrleitung handelt, dann wird diese Kraftfahrzeug-Rohrleitung vorzugsweise zur Durchleitung zumindest eines fluiden Mediums und insbesondere zur Durchleitung von Wasserstoff bzw. molekularem Wasserstoff verwendet. Wenn es sich bei dem erfindungsgemäßen Hohlkörper gemäß bevorzugter Ausführungsform um einen Kraftfahrzeug-Tank handelt, dann wird der Kraftfahrzeug-Tank insbesondere zur Speicherung zumindest eines fluiden Mediums und bevorzugt zur Speicherung von Wasserstoff bzw. molekularem Wasserstoff verwendet. Es ist somit bevorzugt, dass es sich bei dem erfindungsgemäßen Hohlkörper um eine Wasserstoffleitung für Kraftfahrzeuge und/oder um einen Wasserstofftank für Kraftfahrzeuge handelt. Es ist möglich, dass es sich bei dem erfindungsgemäßen Hohlkörper um eine Rohrleitung bzw. Kraftfahrzeug-Rohrleitung für Wasserstofflager bzw. Tankstellen handelt.

Hohlkörper und insbesondere Kraftfahrzeug-Rohrleitungen bzw. Kraftfahrzeug-Tanks zur Durchleitung und/oder zur Speicherung zumindest eines fluiden Mediums, insbesondere zur Durchleitung und/oder zur Speicherung von Wasserstoff, sind aus der Praxis in unterschiedlichen Ausführungsformen grundsätzlich bekannt. Die Wandungen der Hohlkörper sind in der Regel mehrschichtig ausgebildet. Aufgrund ihrer Verwendung zur Durchleitung und/oder zur Speicherung von fluiden Medien, insbesondere von Wasserstoff, weisen die Hohlkörper üblicherweise zumindest eine Barriereschicht auf, die die Permeation des fluiden Mediums, insbesondere des Wasserstoffs, durch die Wandung verhindern soll. Neben der erforderlichen Barrierewirkung ist es erwünscht, dass die Hohlkörper zufriedenstellende mechanische Eigenschaften aufweisen, beispielsweise ausreichend schlagfest sind. Außerdem kommt hinzu, dass aufgrund des in der Regel mehrschichtigen Aufbaus der Wandungen der Hohlkörper in der Praxis Haftungsproblematiken in Form von Schichtdelaminationen beobachtet wurden. Darüber hinaus ist es erforderlich, dass die einzelnen Materialien bzw. die Schichten der Hohlkörper bei der Herstellung hinsichtlich ihrer Verarbeitungseigenschaften - beispielsweise hinsichtlich ihrer Verarbeitungstemperatur - kompatibel sind.

Es hat sich aber gezeigt, dass die bisher bekannten Hohlkörper, insbesondere die bisher bekannten Kraftfahrzeug-Rohrleitungen und/oder Kraftfahrzeug-Tanks, zur Durchleitung und/oder zur Speicherung zumindest eines fluiden Mediums, insbesondere zur Durchleitung und/oder zur Speicherung von Wasserstoff, eine Reihe von Nachteilen aufweisen und insbesondere im Hinblick auf ihre Barriereeigenschaften und/oder im Hinblick auf ihre mechanische Stabilität und/oder im Hinblick auf die Haftung der Schichten und/oder im Hinblick auf die Verarbeitbarkeit bzw. Kompatibilität der Materialien zu wünschen übrig lassen. Kompromisse lassen sich - wenn überhaupt - nur mit hohem Fertigungsaufwand bzw. hohen Materialkosten erreichen. Ein optimaler Kompromiss bezüglich der vorstehend erläuterten Eigenschaften konnte bisher nicht realisiert werden. Insoweit besteht Verbesserungsbedarf und hier setzt die Erfindung ein.

Der Erfindung liegt demgegenüber das technische Problem zugrunde, einen Hohlkörper, insbesondere eine Kraftfahrzeug-Rohrleitung und/oder einen Kraftfahrzeug-Tank, anzugeben, der im Hinblick auf seine Barriereeigenschaften und seine mechanische Stabilität und insbesondere auch hinsichtlich der Haftung der Schichten und der Verarbeitbarkeit bzw. Kompatibilität der Materialien allen Anforderungen genügt und der dennoch vorzugsweise mit geringen Herstellungskosten gefertigt werden kann.

Zur Lösung dieses technischen Problems lehrt die Erfindung einen Hohlkörper, insbesondere eine Kraftfahrzeug-Rohrleitung und/oder einen Kraftfahrzeug-Tank, zur Durchleitung und/oder zur Speicherung zumindest eines fluiden Mediums, insbesondere zur Durchleitung und/oder zur Speicherung von Wasserstoff, wobei der Hohlkörper einen Innenraum und eine den Innenraum umgebende Wandung aufweist, wobei die Wandung mehrschichtig ausgebildet ist und zumindest vier Schichten aufweist und zwar mit folgendem Schichtaufbau von innen nach außen:
- eine Innenschicht aus zumindest einem Polyamid, insbesondere aus zumindest einem aliphatischen Polyamid
- eine Barriereschicht aus zumindest einem Vinylalkohol-Polymer
- eine Haftvermittlerschicht
- eine Außenschicht aus Polyethylen, insbesondere aus PE-HD.

Die Erfindung betrifft einen Hohlkörper, insbesondere eine Kraftfahrzeug-Rohrleitung und/oder einen Kraftfahrzeug-Tank. Der Hohlkörper, insbesondere die Kraftfahrzeug-Rohrleitung und/oder der Kraftfahrzeug-Tank wird vorzugsweise zur Durchleitung und/oder zur Speicherung zumindest eines fluiden Mediums und sehr bevorzugt zur Durchleitung und/oder zur Speicherung von Wasserstoff verwendet.

Wenn es sich bei dem erfindungsgemäßen Hohlkörper gemäß einer bevorzugten Ausführungsform um eine Kraftfahrzeug-Rohrleitung zur Durchleitung zumindest eines fluiden Mediums, insbesondere zur Durchleitung von Wasserstoff, handelt, dann weist die Kraftfahrzeug-Rohrleitung vorzugsweise einen Innenraum in Form eines Fluidkanals und eine den Innenraum bzw. den Fluidkanal umgebende Wandung in Form einer Rohrwandung auf. Wenn es sich bei dem erfindungsgemäßen Hohlkörper gemäß einer weiter bevorzugten Ausführungsform um einen Kraftfahrzeug-Tank zur Speicherung zumindest eines fluiden Mediums, insbesondere zur Speicherung von Wasserstoff, handelt, dann weist der Kraftfahrzeug-Tank vorzugsweise einen Innenraum in Form eines Tank-Innenraumes und eine den Innenraum bzw. den Tank-Innenraum umgebende Wandung in Form einer Tankwandung auf. Grundsätzlich können im Rahmen der Erfindung durch den Hohlkörper auch andere fluide Medien geleitet werden und/oder andere fluide Medien in dem erfindungsgemäßen Hohlkörper gespeichert werden. Sehr bevorzugt wird durch den erfindungsgemäßen Hohlkörper Wasserstoff geleitet und/oder in dem erfindungsgemäßen Hohlkörper Wasserstoff gespeichert. Wasserstoff meint insbesondere molekularen Wasserstoff.

Der Erfindung liegt die Erkenntnis zugrunde, dass der erfindungsgemäße Hohlkörper sich durch einen optimalen Kompromiss aus Barriereeigenschaften, mechanischer Stabilität, insbesondere Schlagfestigkeit, und Verarbeitbarkeit bzw. Kompatibilität der Materialien auszeichnet. Darüber hinaus können Haftungsproblematiken, insbesondere Schichtdelaminationen, bei dem erfindungsgemäßen Hohlkörper weitgehend vermieden bzw. zumindest reduziert werden.

Erfindungsgemäß ist eine Innenschicht aus zumindest einem Polyamid, insbesondere aus zumindest einem aliphatischen Polyamid, vorgesehen. Die Innenschicht aus zumindest einem Polyamid weist bezüglich des durch den Innenraum geleiteten bzw. in dem Innenraum gespeicherten fluiden Mediums, insbesondere des Wasserstoffs, bereits eine gewisse Barrierewirkung auf. Die Innenschicht aus zumindest einem Polyamid ist insbesondere verhältnismäßig wenig anfällig für die Einlagerung von Wasserstoffmolekülen. Demgegenüber ist es aus der Praxis bekannt, dass die in Richtung des Innenraumes der Hohlkörper orientierten Schichten Anfälligkeiten für die Einlagerung von Wasserstoffmolekülen aufweisen können. Dann besteht bei einer Druckänderung in dem Hohlkörper die Gefahr eines spontanen Austritts des eingelagerten Wasserstoffs aus der Wandung und einer damit einhergehenden Beschädigung der Wandung. Dabei spricht man von "Blistering". Die erfindungsgemäße Innenschicht aus zumindest einem Polyamid weist demgegenüber hinsichtlich des in dem Innenraum geführten bzw. gespeicherten fluiden Mediums, insbesondere gegenüber Wasserstoff, bereits eine gewisse Barrierewirkung auf und ist insbesondere verhältnismäßig wenig anfällig für die Einlagerung von Wasserstoff bzw. für Blistering-Effekte.

Die erfindungsgemäße Barriereschicht aus zumindest einem Vinylalkohol-Polymer zeichnet sich insbesondere durch ihre sehr funktionssichere Barrierewirkung gegenüber in dem Innenraum geführten bzw. gespeicherten fluiden Medien und insbesondere gegenüber Wasserstoff aus. Die erfindungsgemäße Barriereschicht schützt somit insbesondere auch die außerhalb der Barriereschicht angeordneten Schichten des Hohlkörpers gegenüber der Einlagerung von Wasserstoff.

Die erfindungsgemäße Haftvermittlerschicht ermöglicht insbesondere eine funktionssichere Haftung zwischen der Barriereschicht aus zumindest einem Vinylalkohol-Polymer und der Außenschicht aus Polyethylen. Auf diese Weise können Haftungsproblematiken und insbesondere Schichtdelaminationen effektiv und funktionssicher verhindert werden und es ist möglich, sowohl eine Barriereschicht aus zumindest einem Vinylalkohol-Polymer als auch eine Außenschicht aus Polyethylen, insbesondere aus PE-HD, einzusetzen.

Die erfindungsgemäße Außenschicht aus Polyethylen ist insbesondere für die mechanische Stabilität und bevorzugt für die Schlagfestigkeit des erfindungsgemäßen Hohlkörpers verantwortlich. Die Außenschicht stellt somit vorzugsweise die Schlagfestigkeit des Hohlkörpers sicher. Polyethylen, insbesondere PE-HD, ist für die Einlagerung von Wasserstoff verhältnismäßig anfällig und es ist aus der Praxis bekannt, dass bei Polyethylen-Schichten bzw. PE-HD-Schichten Blistering-Effekte auftreten können. Erfindungsgemäß kann nichtsdestoweniger eine Polyethylen-Außenschicht, insbesondere eine PE-HD-Außenschicht, eingesetzt werden, da aufgrund der übrigen Schichtstruktur der Wandung insbesondere die Permeation von Wasserstoff aus dem Innenraum des Hohlkörpers in bzw. durch die Wandung sehr funktionssicher vermieden wird und zwar durch den Einsatz einer Innenschicht aus zumindest einem Polyamid und einer Barriereschicht aus zumindest einem Vinylalkohol-Polymer.

Hinzukommt weiterhin, dass mit dem Einsatz einer Polyethylen-Außenschicht, insbesondere einer PE-HD-Außenschicht, bevorzugt auch eine verbesserte Verarbeitbarkeit bzw. Kompatibilität der Materialien bei der Herstellung des Hohlkörpers erreicht werden kann. Die Verarbeitungstemperaturen von Polyamiden und Vinylalkohol-Polymeren unterscheiden sich in der Regel. Insbesondere weisen Polyamide in der Regel eine höhere Verarbeitungstemperatur auf als Vinylalkohol-Polymere. Daher müssen die entsprechenden Mehrschicht-Konstrukte - beispielsweise in Extrusionsprozessen und/oder Blasform-Verfahren - sehr zügig gehandhabt werden. Die Verarbeitungstemperatur von Polyethylen, insbesondere von PE-HD, liegt in der Regel unterhalb der Verarbeitungstemperatur von Polyamiden, sodass die Polyethylen-Außenschicht bei den entsprechenden Herstellungsverfahren eine kühlende Wirkung auf das Mehrschicht-Konstrukt hat und so insgesamt insbesondere zu einer besseren Verarbeitbarkeit führt.

Wenn hier und nachfolgend davon die Rede ist, dass eine Wandungskomponente - insbesondere die Innenschicht und/oder die Barriereschicht und/oder die Haftvermittlerschicht und/oder die Außenschicht - des Hohlkörpers "auf Basis" eines Materials bzw. Kunststoffes ausgebildet ist, meint das im Rahmen der Erfindung insbesondere, dass die Wandungskomponente dieses Material bzw. diesen Kunststoff zu mindestens 50 Gew.-% enthält. Wenn hier und nachfolgend davon die Rede ist, dass eine Wandungskomponente des Hohlkörpers aus einem Material bzw. einem Kunststoff "im Wesentlichen besteht", meint dies im Rahmen der Erfindung insbesondere, dass die Wandungskomponente zu mindestens 93 Gew.-%, vorzugsweise zu mindestens 95 Gew.-%, bevorzugt zu mindestens 96 Gew.-%, weiter bevorzugt zu mindestens 97 Gew.-%, sehr bevorzugt zu mindestens 98 Gew.-% und ganz besonders bevorzugt zu mindestens 99 Gew.-%, aus dem Material bzw. dem Kunststoff besteht. Das trägt insbesondere dem Umstand Rechnung, dass neben dem genannten Material noch Additive in geringem Umfang vorhanden sein können, beispielsweise färbende Zusatzstoffe und/oder Leitfähigkeitsadditive.

Erfindungsgemäß weist die Wandung des Hohlkörpers zumindest vier Schichten auf. Es ist möglich, dass die Wandung des Hohlkörpers zumindest fünf, insbesondere zumindest sechs, vorzugsweise zumindest sieben, beispielsweise zumindest acht, Schichten aufweist. Gemäß einer empfohlenen Ausführungsform des erfindungsgemäßen Hohlkörpers steht die Innenschicht in direktem Kontakt zu dem durch den Innenraum geleiteten bzw. in dem Innenraum gespeicherten fluiden Medium. Zweckmäßigerweise bildet die Innenschicht die nach innen hin abschließende Schicht des Hohlkörpers bzw. der Wandung des Hohlkörpers. Es ist aber grundsätzlich auch möglich, dass nach innen hin anschließend an die Innenschicht zusätzliche Schichten vorgesehen sind, beispielsweise eine innerste Schicht. Es ist weiter bevorzugt, dass die Außenschicht die nach außen hin abschließende Schicht des erfindungsgemäßen Hohlkörpers bzw. der Wandung des Hohlkörpers bildet. Grundsätzlich können nach außen hin an die Außenschicht aber auch weitere Schichten anschließen, beispielsweise eine äußerste Schicht, und es ist auch möglich, dass nach außen hin an die Außenschicht eine Verstärkungsummantelung anschließt. Das wird unten stehend noch näher erläutert.

Es ist bevorzugt, dass die Barriereschicht nach außen hin an die Innenschicht anschließt. Die Barriereschicht steht bevorzugt in direktem Kontakt zu der Innenschicht und somit berühren sich in dieser bevorzugten Ausführungsform vorzugsweise die Barriereschicht und die Innenschicht ohne Zwischenschaltung weiterer Schichten. Weiter bevorzugt schließt an die Barriereschicht nach außen hin die Haftvermittlerschicht an. In einer solchen bevorzugten Ausgestaltung berühren sich somit vorzugsweise die Barriereschicht und die Haftvermittlerschicht ohne Zwischenschaltung weiterer Schichten. Weiter bevorzugt schließt an die Haftvermittlerschicht nach außen hin die Außenschicht an. In einer solchen bevorzugten Ausgestaltung berühren sich somit vorzugsweise die Haftvermittlerschicht und die Außenschicht ohne Zwischenschaltung weiterer Schichten. Grundsätzlich ist es aber möglich, dass zwischen der Innenschicht und der Barriereschicht und/oder zwischen der Barriereschicht und der Haftvermittlerschicht und/oder zwischen der Haftvermittlerschicht und der Außenschicht weitere Schichten angeordnet sind. Es ist insbesondere auch möglich, dass der erfindungsgemäße Hohlkörper zumindest zwei Haftvermittlerschichten und/oder zumindest zwei Barriereschichten aufweist.

Gemäß sehr bevorzugter Ausführungsform der Erfindung weist der erfindungsgemäße Hohlkörper ein vierschichtiges Aggregat aus der Innenschicht, einer nach außen hin an die Innenschicht anschließenden Barriereschicht, einer nach außen hin an die Barriereschicht anschließenden Haftvermittlerschicht und einer nach außen hin an die Haftvermittlerschicht anschließenden Außenschicht ohne Zwischenschaltung weiterer Schichten auf. Durch den entsprechenden direkten Kontakt zwischen der Innenschicht und der Barriereschicht, der Barriereschicht und der Haftvermittlerschicht und der Haftvermittlerschicht und der Außenschicht können die vorstehend erläuterten vorteilhaften Eigenschaften des erfindungsgemäßen Hohlkörpers sehr funktionssicher realisiert werden. Es ist im Rahmen der Erfindung im Übrigen möglich, dass eine Schicht aus mehreren Teilschichten mit identischer bzw. im Wesentlichen identischer Zusammensetzung aufgebaut ist.

Erfindungsgemäß weist die Wandung des Hohlkörpers eine Innenschicht aus zumindest einem Polyamid, insbesondere aus zumindest einem aliphatischen Polyamid, auf. Bevorzugt ist die Innenschicht auf Basis des zumindest einen Polyamids, insbesondere auf Basis des zumindest einen aliphatischen Polyamids, ausgebildet. Sehr bevorzugt umfasst die Innenschicht das zumindest eine Polyamid zu mindestens 60 Gew.-%, vorzugsweise zu mindestens 70 Gew.-%, bevorzugt zu mindestens 80 Gew.-%, sehr bevorzugt zu mindestens 90 Gew.-%. Ganz besonders bevorzugt besteht die Innenschicht aus dem zumindest einen Polyamid bzw. im Wesentlichen aus dem zumindest einen Polyamid.

Eine ganz besonders bevorzugte Ausführungsform der Erfindung ist dadurch gekennzeichnet, dass das zumindest eine Polyamid der Innenschicht zumindest ein aus der Gruppe: "Polyamid 6, Polyamid 10, Polyamid 11, Polyamid 12, Polyamid 6.6, Polyamid 6.10, Polyamid 6.12, Polyamid 6.16, Polyamid 10.10" ausgewähltes Polyamid ist und bevorzugt Polyamid 6 und/oder Polyamid 11 ist. Es ist bevorzugt, dass die Innenschicht aus zumindest einem der vorstehend genannten Polyamide besteht bzw. im Wesentlichen besteht. Sehr bevorzugt besteht die Innenschicht aus Polyamid 6 und/oder Polyamid 11 bzw. besteht im Wesentlichen aus Polyamid 6 und/oder Polyamid 11. Die vorstehend genannten Polyamide und insbesondere Polyamid 6 und/oder Polyamid 11 haben sich als Materialien für die Innenschicht besonders bewährt. Sie zeichnen sich insbesondere als besonders funktionssichere erste Barriere gegenüber in dem Hohlkörper geführten bzw. gespeicherten fluiden Medien und insbesondere gegenüber Wasserstoff aus und sind nichtsdestoweniger sehr wirtschaftlich einsetzbar.

Erfindungsgemäß weist die Wandung des Hohlkörpers eine Barriereschicht aus zumindest einem Vinylalkohol-Polymer auf. Bevorzugt ist die Barriereschicht auf Basis des zumindest einen Vinylalkohol-Polymers ausgebildet. Sehr bevorzugt umfasst die Barriereschicht das zumindest eine Vinylalkohol-Polymer zu mindestens 60 Gew.-%, vorzugsweise zu mindestens 70 Gew.-%, bevorzugt zu mindestens 80 Gew.-%, weiter bevorzugt zu mindestens 90 Gew.-%. Es ist sehr bevorzugt, dass die Barriereschicht aus dem zumindest einen Vinylalkohol-Polymer besteht bzw. im Wesentlichen besteht. Mit dem Ausdruck "Vinylalkohol-Polymer" sind im Rahmen der Erfindung insbesondere Polymere mit einem Vinylalkohol-Monomer bzw. formal mit einem Vinylalkohol-Monomer gemeint. Die entsprechenden Vinylalkohol-Polymere sind vorzugsweise durch Verseifungen und/oder Veresterungen erzeugt.

Es ist bevorzugt, dass das zumindest eine Vinylalkohol-Polymer der Barriereschicht Ethylen-Vinylalkohol-Copolymer (EVOH) und/oder Polyvinylalkohol (PVOH) und/oder Butandiol-Vinylalkohol-Copolymer (BVOH) ist und vorzugsweise Ethylen-Vinylalkohol-Copolymer (EVOH) ist. Der erfindungsgemäße Hohlkörper weist somit vorzugsweise eine Barriereschicht aus Ethylen-Vinylalkohol-Copolymer (EVOH) auf. Es ist bevorzugt, dass die Barriereschicht aus zumindest einem der vorgenannten Vinylalkohol-Polymere besteht bzw. im Wesentlichen besteht. Ganz besonders bevorzugt besteht die Barriereschicht aus Ethylen-Vinylalkohol-Copolymer (EVOH) bzw. besteht im Wesentlichen daraus. Der Ausführungsform, bei der die Barriereschicht aus zumindest einem der vorstehend genannten Vinylalkohol-Polymere erzeugt ist und insbesondere daraus besteht bzw. im Wesentlichen besteht - vorzugsweise aus Ethylen-Vinylalkohol-Copolymer (EVOH) - liegt die Erkenntnis zugrunde, dass sich die Barriereschicht dann durch eine sehr vorteilhafte Barrierewirkung gegenüber durch den Hohlkörper geleiteten bzw. in dem Hohlkörper gespeicherten fluiden Medien und insbesondere gegenüber Wasserstoff auszeichnet.

Es ist sehr bevorzugt, dass die Haftvermittlerschicht auf Basis zumindest eines Polyolefins, vorzugsweise auf Basis von Polypropylen und/oder Polyethylen, sehr bevorzugt auf Basis von Polyethylen, und ganz besonders bevorzugt auf Basis von LLDPE, ausgebildet ist. Bevorzugt umfasst die Haftvermittlerschicht das zumindest eine Polyolefin, vorzugsweise Polypropylen und/oder Polyethylen, bevorzugt Polyethylen, sehr bevorzugt LLDPE, zu mindestens 60 Gew.-%, vorzugsweise zu mindestens 70 Gew.-%, bevorzugt zu mindestens 80 Gew.-%, sehr bevorzugt zu mindestens 90 Gew.-%. Es ist ganz besonders bevorzugt, dass die Haftvermittlerschicht aus dem zumindest einen Polyolefin, vorzugsweise aus Polypropylen und/oder Polyethylen, bevorzugt aus Polyethylen, ganz besonders bevorzugt aus LLDPE, besteht bzw. im Wesentlichen besteht. LLDPE meint im Rahmen der Erfindung insbesondere lineares Polyethylen niedriger Dichte bzw. Linear Low Density Polyethylen.

Der Ausführungsform, bei der die Haftvermittlerschicht auf Basis zumindest eines Polyolefins, vorzugsweise auf Basis von Polypropylen und/oder Polyethylen, sehr bevorzugt auf Basis von Polyethylen und ganz besonders bevorzugt auf Basis von LLDPE, ausgebildet ist und sehr bevorzugt aus zumindest einem Polyolefin, vorzugsweise aus Polypropylen und/oder Polyethylen, besonders bevorzugt aus Polyethylen und ganz besonders bevorzugt aus LLDPE, besteht bzw. im Wesentlichen besteht, liegt die Erkenntnis zugrunde, dass dann eine sehr vorteilhafte Haftung zwischen der Barriereschicht und der Außenschicht realisiert werden kann und das Schichtdelaminationen bzw. Haftungsproblematiken sehr funktionssicher vermieden werden können.

Eine besonders bevorzugte Ausführungsform des erfindungsgemäßen Hohlkörpers ist dadurch gekennzeichnet, dass das Polyolefin, insbesondere das Polypropylen und/oder das Polyethylen, bevorzugt das LLDPE, der Haftvermittlerschicht mit zumindest einer Haftvermittlungskomponente haftungsmodifiziert ist, wobei die Haftvermittlungskomponente bevorzugt Maleinsäure und/oder ein Maleinsäurederivat, vorzugsweise Maleinsäureanhydrid, ist. Bei der zumindest einen Haftvermittlungskomponente handelt es sich bevorzugt um ein Haftvermittlungsadditiv und/oder um eine Haftvermittlungsgruppe. Bevorzugt ist das Polyolefin, insbesondere das Polypropylen und/oder das Polyethylen, bevorzugt das LLDPE, mit Maleinsäureanhydrid als Haftvermittlungsgruppe gepfropft. Neben Maleinsäure und/oder Maleinsäurederivaten, vorzugsweise Maleinsäureanhydrid, kommen auch andere Haftvermittlungskomponenten in Betracht.

Es ist sehr bevorzugt, dass die Haftvermittlerschicht auf Basis des haftungsmodifizierten Polyolefins, insbesondere des haftungsmodifizierten Polypropylens und/oder Polyethylens, sehr bevorzugt auf Basis des haftungsmodifizierten LLDPE, erzeugt ist. Weiter bevorzugt umfasst die Haftvermittlerschicht das haftungsmodifizierte Polyolefin, insbesondere das haftungsmodifizierte Polypropylen und/oder Polyethylen, bevorzugt das haftungsmodifizierte LLDPE, zu mindestens 60 Gew.-%, vorzugsweise zu mindestens 70 Gew.-%, weiter bevorzugt zu mindestens 80 Gew.-%, sehr bevorzugt zu mindestens 90 Gew.-%. Es ist sehr bevorzugt, dass die Haftvermittlerschicht aus dem haftungsmodifizierten Polyolefin, insbesondere aus dem haftungsmodifizierten Polypropylen und/oder Polyethylen, bevorzugt aus dem haftungsmodifizierten LLDPE, besteht bzw. im Wesentlichen besteht. Die zumindest eine Haftvermittlungskomponente trägt in vorteilhafter Weise zu einer weiteren Haftungsverbesserung zwischen der Barriereschicht und der Außenschicht bei. Wenn gemäß bevorzugter Ausführungsform als Haftvermittlungskomponente Maleinsäure und/oder ein Maleinsäurederivat, vorzugsweise Maleinsäureanhydrid, verwendet wird, kann die Haftung zwischen der Barriereschicht und der Außenschicht weiter verbessert werden.

Erfindungsgemäß weist die Wandung des Hohlkörpers eine Außenschicht aus Polyethylen, insbesondere aus PE-HD, auf. Es ist bevorzugt, dass die Außenschicht auf Basis von Polyethylen, insbesondere auf Basis von PE-HD, ausgebildet ist. Sehr bevorzugt umfasst die Außenschicht Polyethylen, insbesondere PE-HD, zu mindestens 60 Gew.-%, vorzugsweise zu mindestens 70 Gew.-%, bevorzugt zu mindestens 80 Gew.-%, sehr bevorzugt zu mindestens 90 Gew.-%. Es ist sehr bevorzugt, dass die Außenschicht aus Polyethylen, insbesondere aus PE-HD, besteht bzw. im Wesentlichen besteht. PE-HD meint im Rahmen der Erfindung insbesondere Polyethylen hoher Dichte bzw. High Density Polyethylen.

Eine sehr bevorzugte Ausführungsform der Erfindung ist dadurch gekennzeichnet, dass der Hohlkörper eine Verstärkungsummantelung aufweist, die außerhalb der Außenschicht angeordnet ist, wobei die Verstärkungsummantelung vorzugsweise nach außen hin an die Außenschicht anschließt und wobei die Verstärkungsummantelung bevorzugt auf Basis von Kohlenstofffasern ausgebildet ist. Gemäß sehr bevorzugter Ausführungsform berühren sich somit die Verstärkungsummantelung und die Außenschicht ohne Zwischenschaltung weiterer Schichten. Die Verstärkungsummantelung führt bevorzugt zu einer weiter erhöhten Druckresistenz des Hohlkörpers und ermöglicht insbesondere den Einsatz des Hohlkörpers bei besonders hohen Fluiddrücken bzw. Wasserstoffdrücken. Sehr bevorzugt handelt es sich bei der Verstärkungsummantelung um harzgetränkte Kohlenstofffasern, insbesondere um Epoxidharz-getränkte Kohlenstofffasern.

Es ist sehr bevorzugt, dass die Gesamtschichtdicke d der Wandung des Hohlkörpers 0,5 mm bis 7,0 mm, vorzugsweise 1,0 mm bis 6,0 mm, bevorzugt 1,5 mm bis 5,5 mm, weiter bevorzugt 1,7 mm bis 5,2 mm, sehr bevorzugt 1,8 mm bis 5,0 mm, besonders bevorzugt 1,9 mm bis 4,5 mm, beispielsweise 2,0 mm bis 4,0 mm beträgt. Gesamtschichtdicke d der Wandung des Hohlkörpers meint im Rahmen der Erfindung insbesondere die größte Ausdehnung der Gesamtheit der Schichten der Wandung quer, insbesondere senkrecht bzw. im Wesentlichen senkrecht, zur Längsrichtung des Hohlkörpers. Die gemäß einer Ausführungsform vorgesehene Verstärkungsummantelung zählt insbesondere nicht zu den Schichten der Wandung hinzu und somit auch vorzugsweise nicht zu der Gesamtschichtdicke d der Wandung hinzu.

Der Hohlkörper bzw. der Innenraum des Hohlkörpers erstreckt sich insbesondere in einer Längsrichtung. Wenn der Hohlkörper gemäß bevorzugter Ausführungsform als Kraftfahrzeug-Rohrleitung ausgebildet ist, dann erstreckt sich insbesondere die Rohrleitung bzw. der Fluidkanal der Rohrleitung in Längsrichtung. Wenn der Hohlkörper gemäß bevorzugter Ausführungsform als Kraftfahrzeug-Tank ausgebildet ist, dann erstreckt sich insbesondere der Kraftfahrzeug-Tank bzw. der Tank-Innenraum in Längsrichtung und ist vorzugsweise an seinen beiden Enden verschlossen. Sehr bevorzugt ist der Hohlkörper, insbesondere die Kraftfahrzeug-Rohrleitung und/oder der Kraftfahrzeug-Tank, im Querschnitt, also bevorzugt quer, insbesondere senkrecht bzw. im Wesentlichen senkrecht, zu seiner Längserstreckung rund, insbesondere kreisrund bzw. im Wesentlichen kreisrund, ausgebildet.

Es ist bevorzugt, dass die Innenschicht und/oder die Außenschicht (jeweils) eine größere Schichtdicke aufweist/aufweisen als die Barriereschicht und/oder (jeweils) eine größere Schichtdicke aufweist/aufweisen als die Haftvermittlerschicht. Dieser Ausführungsform liegt die Erkenntnis zugrunde, dass der Hohlkörper dann sehr wirtschaftlich hergestellt werden kann und dass nichtsdestoweniger alle Anforderungen, insbesondere im Hinblick auf die mechanische Festigkeit, die Barrierewirkung und die Haftung der Schichten erfüllt werden. Gemäß einer weiteren bevorzugten Ausführungsform sind die Schichtdicken der Barriereschicht und der Innenschicht und der Außenschicht identisch bzw. im Wesentlichen identisch.

Eine bevorzugte Ausführungsform der Erfindung ist dadurch gekennzeichnet, dass die Barriereschicht eine größere Schichtdicke aufweist als die Haftvermittlerschicht. Sehr bevorzugt ist die Schichtdicke der Barriereschicht mehr als dreimal, insbesondere mehr als viermal, bevorzugt mehr als fünfmal, sehr bevorzugt mehr als sechsmal, bevorzugt mehr als siebenmal, weiter bevorzugt mehr als achtmal, besonders bevorzugt mehr als neunmal, ganz besonders bevorzugt mehr als zehnmal, so groß wie die Schichtdicke der Haftvermittlerschicht.

Es ist sehr bevorzugt, dass die Schichtdicke der Barriereschicht 10 % bis 45 %, vorzugsweise 12 % bis 40 %, bevorzugt 15 % bis 38 %, sehr bevorzugt 18 % bis 35 %, besonders bevorzugt 18 % bis 33 %, der Gesamtschichtdicke d der Wandung des Hohlkörpers beträgt und/oder wobei die Schichtdicke der Barriereschicht sehr bevorzugt 0,1 mm bis 2,2 mm, besonders bevorzugt 0,2 mm bis 2,0 mm, weiter bevorzugt 0,4 mm bis 1,7 mm, beträgt. Dieser Ausführungsform liegt die Erkenntnis zugrunde, dass der Hohlkörper bzw. die Wandung dann eine sehr funktionssichere Barrierewirkung gegenüber dem fluiden Medium, insbesondere gegenüber Wasserstoff, aufweist und nichtsdestoweniger verhältnismäßig kostengünstig erzeugt werden kann und in Zusammenwirkung mit den übrigen Schichten neben der vorteilhaften Barrierewirkung auch sehr vorteilhafte Eigenschaften im Hinblick auf die mechanische Festigkeit, die Vermeidung von Haftungsproblematiken und die Verarbeitbarkeit der Materialien aufweist.

Es ist sehr bevorzugt, dass die Schichtdicke der Außenschicht und/oder die Schichtdicke der Innenschicht (jeweils) 15 % bis 55 %, vorzugsweise 20 % bis 50 %, bevorzugt 22 % bis 47 %, sehr bevorzugt 25 % bis 45 %, besonders bevorzugt 30 % bis 42 %, der Gesamtschichtdicke d der Wandung des Hohlkörpers beträgt und/oder wobei die Schichtdicke der Außenschicht und/oder die Schichtdicke der Innenschicht sehr bevorzugt (jeweils) 0,2 mm bis 3,0 mm, besonders bevorzugt 0,4 mm bis 2,4 mm, weiter bevorzugt 0,6 mm bis 2,0 mm, weiter bevorzugt 0,8 mm bis 1,7 mm beträgt. Dieser Ausführungsform liegt die Erkenntnis zugrunde, dass sich der Hohlkörper bzw. die Wandung des Hohlkörpers dann insbesondere durch sehr vorteilhafte Eigenschaften im Hinblick auf die Barrierewirkung - insbesondere aufgrund der Ausgestaltung der Innenschicht - und/oder im Hinblick auf die mechanische Festigkeit - insbesondere aufgrund der Ausgestaltung der Außenschicht - auszeichnet und in Zusammenwirkung mit den übrigen Schichten insbesondere sehr vorteilhafte Barriereeigenschaften erzielt werden können und Haftungsproblematiken vermieden werden können und darüber hinaus auch eine sehr gute Verarbeitbarkeit der Materialien realisiert wird. Die sehr funktionssichere Verarbeitbarkeit der Materialien resultiert insbesondere aus der bevorzugten Ausgestaltung der Außenschicht in Zusammenwirkung mit den übrigen Schichten des Hohlkörpers.

Gemäß einer bevorzugten Ausführungsform der Erfindung beträgt die Schichtdicke der Barriereschicht 28 % bis 35 % der Gesamtschichtdicke d der Wandung des Hohlkörpers und/oder beträgt die Schichtdicke der Innenschicht 28 % bis 35 % der Gesamtschichtdicke d der Wandung des Hohlkörpers und/oder beträgt die Schichtdicke der Außenschicht 28 % bis 35 % der Gesamtschichtdicke d der Wandung des Hohlkörpers. Gemäß einer weiteren bevorzugten Ausführungsform der Erfindung beträgt die Schichtdicke der Barriereschicht 18 % bis 22 % der Gesamtschichtdicke d der Wandung des Hohlkörpers und/oder beträgt die Schichtdicke der Innenschicht 38 % bis 42 % der Gesamtschichtdicke d der Wandung des Hohlkörpers und/oder beträgt die Schichtdicke der Außenschicht 38 % bis 42 % der Gesamtschichtdicke d der Wandung des Hohlkörpers.

Es ist ganz besonders bevorzugt, dass die Schichtdicke der Haftvermittlerschicht 0,2 % bis 12 %, vorzugsweise 0,5 % bis 10 %, bevorzugt 1% bis 8 %, sehr bevorzugt 1,2 % bis 6 %, besonders bevorzugt 1,5 % bis 4 %, der Gesamtschichtdicke d der Wandung des Hohlkörpers beträgt und/oder wobei die Schichtdicke der Haftvermittlerschicht sehr bevorzugt 0,01 mm bis 0,3 mm, besonders bevorzugt 0,03 mm bis 0,2 mm, weiter bevorzugt 0,04 mm bis 0,15 mm, weiter bevorzugt 0,05 mm bis 0,12 mm, beträgt. Dieser Ausführungsform liegt die Erkenntnis zugrunde, dass durch die spezielle Ausgestaltung der Haftvermittlerschicht insbesondere eine sehr funktionssichere Haftung zwischen der Barriereschicht und der Außenschicht erreicht werden kann, mit der Schichtdelaminationen und Haftungsproblematiken weitgehend vermieden bzw. zumindest deutlich reduziert werden können, sodass insbesondere der Einsatz der Außenschicht aus Polyethylen, insbesondere aus PE-HD, ermöglicht wird.

Es ist bevorzugt, dass der Hohlkörper durch Coextrusion und/oder durch Blasformen erzeugt ist. Wenn es sich bei dem erfindungsgemäßen Hohlkörper gemäß bevorzugter Ausführungsform um eine Kraftfahrzeug-Rohrleitung, insbesondere um eine Wasserstoffleitung für Kraftfahrzeuge, handelt, dann ist es sehr bevorzugt, dass die Rohrleitung durch Coextrusion erzeugt ist. Wenn es sich gemäß bevorzugter Ausführungsform bei dem erfindungsgemäßen Hohlkörper um einen Kraftfahrzeug-Tank, sehr bevorzugt um einen Wasserstofftank für Kraftfahrzeuge, handelt, dann ist es sehr bevorzugt, dass der Tank durch Blasformen erzeugt ist.

Zur Lösung des technischen Problems lehrt die Erfindung außerdem die Verwendung eines vorstehend beschriebenen Hohlkörpers zur Durchleitung und/oder zur Speicherung von Wasserstoff, insbesondere in einem Kraftfahrzeug. Es ist im Rahmen der erfindungsgemäßen Verwendung bevorzugt, dass der Wasserstoff unter Druck durch den Hohlkörper geleitet wird und/oder in dem Hohlkörper gespeichert wird, und wobei der Druck vorzugsweise 150 bar bis 1000 bar, bevorzugt 200 bar bis 950 bar, sehr bevorzugt 250 bar bis 900 bar, beträgt.

Der Erfindung liegt die Erkenntnis zugrunde, dass sich der erfindungsgemäße Hohlkörper, insbesondere die erfindungsgemäße Kraftfahrzeug-Rohrleitung und/oder der erfindungsgemäße Kraftfahrzeug-Tank, durch sehr vorteilhafte Eigenschaften im Hinblick auf die Barrierewirkung gegenüber dem fluiden Medium, insbesondere gegenüber Wasserstoff, im Hinblick auf die mechanische Festigkeit - insbesondere im Hinblick auf die Schlagfestigkeit -, im Hinblick auf die Vermeidung von Haftungsproblematiken und im Hinblick auf die Verarbeitbarkeit bzw. die Kompatibilität der Materialien auszeichnet. Erfindungsgemäß kann insbesondere ein äußerst vorteilhafter Kompromiss aus diesen Eigenschaften erzielt werden. Nichtsdestoweniger ist der erfindungsgemäße Hohlkörper verhältnismäßig kostengünstig herstellbar und somit sehr wirtschaftlich. Der erfindungsgemäße Hohlkörper eignet sich in besonderem Maße zur Durchleitung und/oder zur Speicherung von Wasserstoff, vorzugsweise unter Druck. Mittels der Innenschicht aus zumindest einem Polyamid, insbesondere aus Polyamid 6 und/oder aus Polyamid 11, und durch die Barriereschicht aus zumindest einem Vinylalkohol-Polymer, insbesondere aus Ethylen-Vinylalkohol-Copolymer (EVOH), wird eine sehr funktionssichere Barrierewirkung gegenüber dem fluiden Medium, insbesondere gegenüber Wasserstoff, erreicht und Blistering-Effekte lassen sich erheblich reduzieren bzw. nahezu vollständig vermeiden. Durch die erfindungsgemäße Außenschicht aus Polyethylen, insbesondere aus PE-HD, kann sowohl die mechanische Festigkeit, insbesondere die Schlagfestigkeit, des Hohlkörpers gewährleistet werden als auch eine im Vergleich zu den aus der Praxis bekannten Maßnahmen verbesserte Verarbeitbarkeit bzw. Kompatibilität der Materialien realisiert werden. Durch die erfindungsgemäße Haftvermittlerschicht wird es ermöglicht, sowohl eine Barriereschicht aus einem Vinylalkohol-Polymer, insbesondere aus Ethylen-Vinylalkohol-Copolymer (EVOH), als auch eine Außenschicht aus Polyethylen, insbesondere aus PE-HD, zu verwenden.

Der erfindungsgemäße Hohlkörper bzw. der spezielle Schichtaufbau der Wandung des Hohlkörpers erlaubt es insbesondere, die vorteilhaften Eigenschaften einer Polyamid-Schicht und einer Vinylalkohol-Polymer-Barriereschicht mit den vorteilhaften Eigenschaften einer Polyethylen-Schicht, insbesondere einer PE-HD-Schicht, zu kombinieren. Denn die Polyamid-Innenschicht und die Vinylalkohol-Polymer-Barriereschicht ermöglichen eine sehr funktionssichere Vermeidung einer Permeation und/oder einer Einlagerung des fluiden Mediums, insbesondere des Wasserstoffs, durch bzw. in die Wandung, sodass insbesondere in die für Blistering-Effekte verhältnismäßig anfällige Außenschicht aus Polyethylen, insbesondere aus PE-HD, kein fluides Medium, insbesondere kein Wasserstoff, vordringt. Weiterhin ist zu betonen, dass der erfindungsgemäße Hohlkörper sehr funktionssicher hergestellt werden kann, weil aufgrund der Kombination und speziellen Abfolge von Schichten insbesondere auch die Verarbeitbarkeit bzw. Kompatibilität der Materialien sichergestellt wird.

Nachfolgend wird die Erfindung anhand einer lediglich ein Ausführungsbeispiel darstellenden Zeichnung näher erläutert. Es zeigen in schematischer Darstellung:
- Fig. 1: einen Schnitt durch einen erfindungsgemäßen Hohlkörper
- Fig. 2: eine perspektivische Ansicht einer erfindungsgemäßen Kraftfahrzeug-Rohrleitung und
- Fig. 3: eine perspektivische Ansicht eines erfindungsgemäßen Kraftfahrzeug-Tanks.

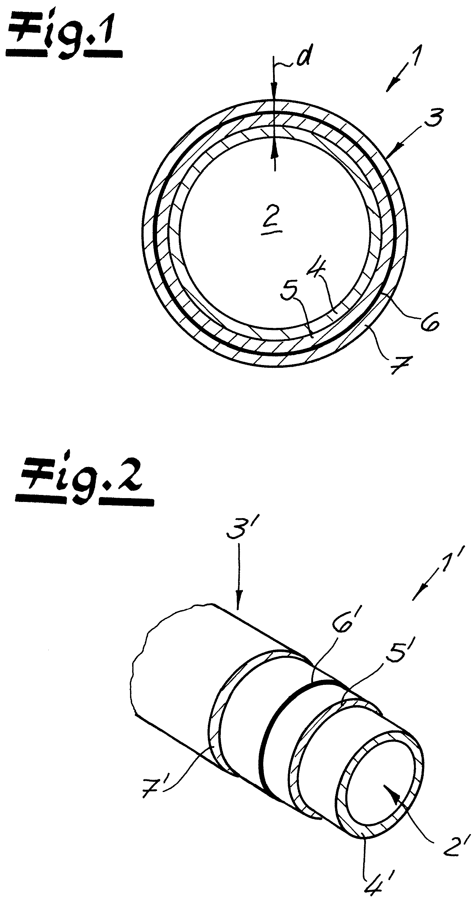

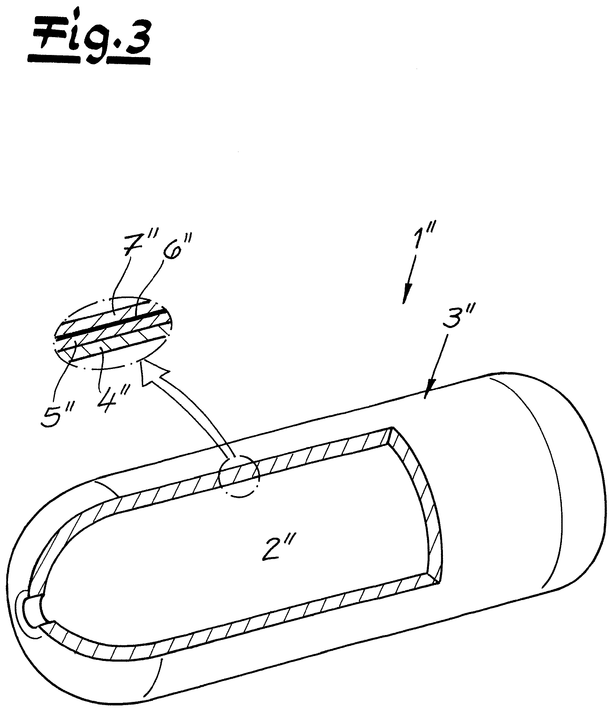

Die Figuren zeigen einen erfindungsgemäßen Hohlkörper 1. Im Ausführungsbeispiel gemäß der Fig. 2 handelt es sich bei dem Hohlkörper 1 um eine Kraftfahrzeug-Rohrleitung 1', die sehr bevorzugt und im Ausführungsbeispiel gemäß der Fig. 2 als Wasserstoffleitung für Kraftfahrzeuge ausgebildet ist. Im Ausführungsbeispiel gemäß der Fig. 3 handelt es sich bei dem Hohlkörper 1 um einen Kraftfahrzeug-Tank 1" und sehr bevorzugt und im Ausführungsbeispiel gemäß der Fig. 3 handelt es sich dabei um einen Wasserstofftank für Kraftfahrzeuge. Der Hohlkörper 1 weist erfindungsgemäß einen Innenraum 2 und eine den Innenraum 2 umgebende Wandung 3 auf. Durch den Innenraum 2 wird ein fluides Medium, insbesondere Wasserstoff, geleitet bzw. wird in dem Innenraum 2 ein fluides Medium, insbesondere Wasserstoff, gespeichert, wobei das fluide Medium bzw. der Wasserstoff in den Figuren nicht näher dargestellt ist.

In der Ausführungsform gemäß Fig. 2 ist der Hohlkörper 1 als Kraftfahrzeug-Rohrleitung 1' bzw. Wasserstoffleitung für Kraftfahrzeuge ausgebildet und weist einen Fluidkanal 2' und eine den Fluidkanal 2' umgebende Rohrwandung 3' auf. In dem Fluidkanal 2' wird das fluide Medium bzw. der Wasserstoff geführt. In der Ausführungsform gemäß Fig. 3 ist der Hohlkörper 1 als Kraftfahrzeug-Tank 1" bzw. Wasserstofftank für Kraftfahrzeuge ausgebildet und weist einen Tank-Innenraum 2" und eine den Tank-Innenraum 2" umgebende Tankwandung 3" auf. In dem Tank-Innenraum 2" wird das fluide Medium bzw. der Wasserstoff gespeichert. Die nachstehend beschriebenen Eigenschaften der Schichten 4, 5, 6 und 7 des Hohlkörpers 1 gelten insbesondere in analoger Weise für die Schichten 4', 5', 6' und 7' der in der Fig. 2 dargestellten Kraftfahrzeug-Rohrleitung 1' und für die Schichten 4", 5", 6" und 7" des in der Fig. 3 dargestellten Kraftfahrzeug-Tanks 1".

Die Wandung 3 des erfindungsgemäßen Hohlkörpers 1 ist mehrschichtig ausgebildet und weist vorzugsweise und im Ausführungsbeispiel gemäß den Figuren vier Schichten auf und zwar von innen nach außen: eine Innenschicht 4 aus zumindest einem Polyamid, eine Barriereschicht 5 aus zumindest einem Vinylalkohol-Polymer, eine Haftvermittlerschicht 6 und eine Außenschicht 7 aus Polyethylen.

Die Innenschicht 4 besteht gemäß bevorzugter Ausführungsform und im Ausführungsbeispiel aus Polyamid 11 bzw. im Wesentlichen aus Polyamid 11. Nach außen hin an die Innenschicht 4 schließt vorzugsweise und im Ausführungsbeispiel gemäß den Figuren die Barriereschicht 5 an. Die Barriereschicht 5 besteht bevorzugt und im Ausführungsbeispiel aus Ethylen-Vinylalkohol-Copolymer (EVOH) bzw. im Wesentlichen daraus. Nach außen hin an die Barriereschicht 5 schließt bevorzugt und im Ausführungsbeispiel die Haftvermittlerschicht 6 an. Die Haftvermittlerschicht 6 besteht bevorzugt aus Polyethylen bzw. im Wesentlichen aus Polyethylen und sehr bevorzugt aus LLDPE bzw. im Wesentlichen aus LLDPE. Sehr bevorzugt und im Ausführungsbeispiel ist das Polyethylen bzw. das LLDPE der Haftvermittlerschicht 6 mit zumindest einer Haftvermittlungskomponente - bevorzugt und im Ausführungsbeispiel mit einer Haftvermittlungsgruppe - haftungsmodifiziert und bei der Haftvermittlungsgruppe handelt es sich ganz besonders bevorzugt und im Ausführungsbeispiel um Maleinsäureanhydrid. Das Polyethylen bzw. das LLDPE der Haftvermittlerschicht 6 ist bevorzugt und im Ausführungsbeispiel mit Maleinsäureanhydrid gepfropft. Sehr bevorzugt und im Ausführungsbeispiel besteht die Haftvermittlerschicht 6 aus dem haftungsmodifizierten Polyethylen, insbesondere aus dem haftungsmodifizierten LLDPE, bzw. im Wesentlichen daraus.

Nach außen hin an die Haftvermittlerschicht 6 schließt vorzugsweise im Ausführungsbeispiel die Außenschicht 7 an. Die Außenschicht 7 besteht bevorzugt und im Ausführungsbeispiel aus PE-HD bzw. im Wesentlichen aus PE-HD.

Es ist sehr bevorzugt, dass die Gesamtschichtdicke d der Wandung 3 des Hohlkörpers 1 1,5 mm bis 5,5 mm beträgt. Im Ausführungsbeispiel gemäß den Figuren mag die Gesamtschichtdicke d der Wandung 3 2,0 mm bis 4,0 mm, beispielsweise 3,0 mm betragen. Bevorzugt und im Ausführungsbeispiel weisen die Innenschicht 4 und die Außenschicht 7 und die Barriereschicht 5 eine identische bzw. im Wesentlichen identische Schichtdicke auf und weisen insbesondere und im Ausführungsbeispiel jeweils eine größere Schichtdicke auf als die Haftvermittlerschicht 6.

Es ist bevorzugt, dass die Schichtdicke der Barriereschicht 15 % bis 38 % der Gesamtschichtdicke d der Wandung 3 des Hohlkörpers 1 beträgt. Im Ausführungsbeispiel gemäß den Figuren mag die Schichtdicke der Barriereschicht 5 etwa 30 % der Gesamtschichtdicke d der Wandung 3 des Hohlkörpers 1 betragen. Weiter bevorzugt beträgt die Schichtdicke der Außenschicht 7 und die Schichtdicke der Innenschicht 4 jeweils 30 % bis 42 % der Gesamtschichtdicke d der Wandung 3 des Hohlkörpers 1. Sehr bevorzugt und im Ausführungsbeispiel mag die Schichtdicke der Außenschicht 7 und die Schichtdicke der Innenschicht 4 jeweils etwa 30 % bis 35 % der Gesamtschichtdicke d der Wandung 3 betragen. Es ist bevorzugt, dass die Schichtdicke der Haftvermittlerschicht 6 1,5 % bis 4 % der Gesamtschichtdicke d der Wandung 3 des Hohlkörpers 1 beträgt. Im Ausführungsbeispiel und gemäß bevorzugter Ausführungsform mag die Schichtdicke der Haftvermittlerschicht 6 etwa 2 % der Gesamtschichtdicke d der Wandung 3 des Hohlkörpers 1 betragen.

Bevorzugt und im Ausführungsbeispiel ist der Hohlkörper 1 durch Coextrusion und/oder durch Blasformen erzeugt. Die in der Fig. 2 dargestellte Kraftfahrzeug-Rohrleitung 1' ist bevorzugt durch Coextrusion hergestellt. Der in der Fig. 3 dargestellte Kraftfahrzeug-Tank 1" ist bevorzugt durch Blasformen erzeugt. Der erfindungsgemäße Hohlkörper 1, insbesondere die Kraftfahrzeug-Rohrleitung 1' und der Kraftfahrzeug-Tank 1" werden sehr bevorzugt zur Durchleitung und/oder zur Speicherung von Wasserstoff verwendet und werden insbesondere in einem Kraftfahrzeug dazu verwendet. Der Wasserstoff steht gemäß bevorzugter Ausführungsform dabei unter Druck.

## Patentansprüche

1. Hohlkörper (1), insbesondere Kraftfahrzeug-Rohrleitung (1') und/oder Kraftfahrzeug-Tank (1"), zur Durchleitung und/oder zur Speicherung zumindest eines fluiden Mediums, insbesondere zur Durchleitung und/oder zur Speicherung von Wasserstoff, wobei der Hohlkörper (1) einen Innenraum (2) und eine den Innenraum (2) umgebende Wandung (3) aufweist, wobei die Wandung (3) mehrschichtig ausgebildet ist und zumindest vier Schichten aufweist und zwar mit folgendem Schichtaufbau von innen nach außen:
- eine Innenschicht (4) aus zumindest einem Polyamid, insbesondere aus zumindest einem aliphatischen Polyamid
- eine Barriereschicht (5) aus zumindest einem Vinylalkohol-Polymer
- eine Haftvermittlerschicht (6)
- eine Außenschicht (7) aus Polyethylen, insbesondere aus PE-HD.

2. Hohlkörper nach Anspruch 1, wobei das zumindest eine Polyamid der Innenschicht (4) zumindest ein aus der Gruppe: "Polyamid 6, Polyamid 10, Polyamid 11, Polyamid 12, Polyamid 6.6, Polyamid 6.10, Polyamid 6.12, Polyamid 6.16, Polyamid 10.10" ausgewähltes Polyamid ist und bevorzugt Polyamid 6 und/oder Polyamid 11 ist.

3. Hohlkörper nach einem der Ansprüche 1 oder 2, wobei das zumindest eine Vinylalkohol-Polymer der Barriereschicht (5) Ethylen-Vinylalkohol-Copolymer (EVOH) und/oder Polyvinylalkohol (PVOH) und/oder Butandiol-Vinylalkohol-Copolymer (BVOH) ist und vorzugsweise Ethylen-Vinylalkohol-Copolymer (EVOH) ist.

4. Hohlkörper nach einem der Ansprüche 1 bis 3, wobei die Haftvermittlerschicht (6) auf Basis zumindest eines Polyolefins, vorzugsweise auf Basis von Polypropylen und/oder Polyethylen, sehr bevorzugt auf Basis von Polyethylen, und ganz besonders bevorzugt auf Basis von LLDPE, ausgebildet ist.

5. Hohlkörper nach Anspruch 4, wobei das Polyolefin, insbesondere das Polypropylen und/oder das Polyethylen, bevorzugt das LLDPE, der Haftvermittlerschicht (6) mit zumindest einer Haftvermittlungskomponente haftungsmodifiziert ist, wobei die Haftvermittlungskomponente bevorzugt Maleinsäure und/oder ein Maleinsäurederivat, vorzugsweise Maleinsäureanhydrid, ist.

6. Hohlkörper nach einem der Ansprüche 1 bis 5, wobei der Hohlkörper (1) eine Verstärkungsummantelung aufweist, die außerhalb der Außenschicht (7) angeordnet ist, wobei die Verstärkungsummantelung vorzugsweise nach außen hin an die Außenschicht (7) anschließt und wobei die Verstärkungsummantelung bevorzugt auf Basis von Kohlenstofffasern ausgebildet ist.

7. Hohlkörper nach einem der Ansprüche 1 bis 6, wobei die Gesamtschichtdicke d der Wandung (3) des Hohlkörpers (1) 0,5 mm bis 7,0 mm, vorzugsweise 1,0 mm bis 6,0 mm, bevorzugt 1,5 mm bis 5,5 mm, weiter bevorzugt 1,7 mm bis 5,2 mm, sehr bevorzugt 1,8 mm bis 5,0 mm, besonders bevorzugt 1,9 mm bis 4,5 mm, beispielsweise 2,0 mm bis 4,0 mm, beträgt.

8. Hohlkörper nach einem der Ansprüche 1 bis 7, wobei die Innenschicht (4) und/oder die Außenschicht (7) eine größere Schichtdicke aufweist/aufweisen als die Barriereschicht (5) und/oder eine größere Schichtdicke aufweist/aufweisen als die Haftvermittlerschicht (6).

9. Hohlkörper nach einem der Ansprüche 1 bis 8, wobei die Barriereschicht (5) eine größere Schichtdicke aufweist als die Haftvermittlerschicht (6).

10. Hohlkörper nach einem der Ansprüche 1 bis 9, wobei die Schichtdicke der Barriereschicht (5) 10 % bis 45 %, vorzugsweise 12 % bis 40 %, bevorzugt 15 % bis 38 %, sehr bevorzugt 18 % bis 35 %, besonders bevorzugt 18 % bis 33 %, der Gesamtschichtdicke d der Wandung (3) des Hohlkörpers (1) beträgt und/oder wobei die Schichtdicke der Barriereschicht (5) sehr bevorzugt 0,1 mm bis 2,2 mm, besonders bevorzugt 0,2 mm bis 2,0 mm, weiter bevorzugt 0,4 mm bis 1,7 mm, beträgt.

11. Hohlkörper nach einem der Ansprüche 1 bis 10, wobei die Schichtdicke der Außenschicht (7) und/oder die Schichtdicke der Innenschicht (4) 15 % bis 55 %, vorzugsweise 20 % bis 50 %, bevorzugt 22 % bis 47 %, sehr bevorzugt 25 % bis 45 %, besonders bevorzugt 30 % bis 42 %, der Gesamtschichtdicke d der Wandung (3) des Hohlkörpers (1) beträgt und/oder wobei die Schichtdicke der Außenschicht (7) und/oder die Schichtdicke der Innenschicht (4) sehr bevorzugt 0,2 mm bis 3,0 mm, besonders bevorzugt 0,4 mm bis 2,4 mm, weiter bevorzugt 0,6 mm bis 2,0 mm, weiter bevorzugt 0,8 mm bis 1,7 mm, beträgt.

12. Hohlkörper nach einem der Ansprüche 1 bis 11, wobei die Schichtdicke der Haftvermittlerschicht (6) 0,2 % bis 12 %, vorzugsweise 0,5 % bis 10 %, bevorzugt 1 % bis 8 %, sehr bevorzugt 1,2 % bis 6 %, besonders bevorzugt 1,5 % bis 4 %, der Gesamtschichtdicke d der Wandung (3) des Hohlkörpers (1) beträgt und/oder wobei die Schichtdicke der Haftvermittlerschicht (6) sehr bevorzugt 0,01 mm bis 0,3 mm, besonders bevorzugt 0,03 mm bis 0,2 mm, weiter bevorzugt 0,04 mm bis 0,15 mm, weiter bevorzugt 0,05 mm bis 0,12 mm, beträgt.

13. Hohlkörper nach einem der Ansprüche 1 bis 12, wobei der Hohlkörper (1) durch Coextrusion und/oder durch Blasformen erzeugt ist.

14. Verwendung eines Hohlkörpers nach einem der Ansprüche 1 bis 13 zur Durchleitung und/oder zur Speicherung von Wasserstoff, insbesondere in einem Kraftfahrzeug.

15. Verwendung nach Anspruch 14, wobei der Wasserstoff unter Druck durch den Hohlkörper (1) geleitet und/oder in dem Hohlkörper (1) gespeichert wird, und wobei der Druck vorzugsweise 150 bar bis 1000 bar, bevorzugt 200 bar bis 950 bar, sehr bevorzugt 250 bar bis 900 bar, beträgt.
